# FASCICULE DE BREVET EUROPEEN

(11) **EP 2 776 206 B1**
(45) Date de publication et mention de la délivrance du brevet: **30.03.2016**
(21) Numéro de dépôt: 12787793.4
(22) Date de dépôt: 22.10.2012
(51) Int. Cl.: B23K 26/38, B23K 26/14

(54) **BUSE LASER A ELEMENT MOBILE SUR COUCHE GAZEUSE**
LASERDÜSE MIT EINEM AUF EINER GASSCHICHT BEWEGLICHEN ELEMENT
LASER NOZZLE WITH AN ELEMENT MOBILE ON A GAS LAYER

(30) Priorité: 07.11.2011 FR 1160051
(43) Date de publication de la demande: 17.09.2014
(73) Titulaire: L'Air Liquide Société Anonyme pour l'Etude et l'Exploitation des Procédés Georges Claude, 75007 Paris (FR)
(72) Inventeur: DEBECKER, Isabelle, 75017 Paris (FR); JOUANNEAU, Thomas, 38000 Grenoble (FR); LEFEBVRE, Philippe, 78250 Meulan (FR)
(74) Mandataire: Pittis, Olivier
(86) Numéro de dépôt international: PCT/FR2012/052411
(87) Numéro de publication internationale: WO 2013/068665

(56) Documents cités:
- EP-A1- 1 669 159
- WO-A1-02/30612
- JP-A- 7 251 287

## Description

L'invention concerne une buse laser utilisable en coupage par faisceau laser avec élément mobile interne comprenant une jupe permettant de concentrer le gaz de coupe dans la saignée de coupe, ainsi qu'un procédé de coupage laser mettant en oeuvre ladite buse, une tête de focalisation laser sur laquelle est fixée ladite buse, et une installation de coupage laser apte à opérer ledit procédé.

Le coupage par faisceau laser nécessite l'utilisation d'une buse généralement en cuivre ayant pour effet de canaliser le gaz et laisser passer le faisceau laser.

Les buses ont typiquement des diamètres de leur orifice de sortie compris entre 0.5 et 3 mm pour une distance de travail comprise entre 0,6 et 2 mm.

Afin de permettre la découpe, il est nécessaire d'utiliser des pressions élevées, en général de plusieurs bar, dans la tête de focalisation afin de permettre au gaz de rentrer dans la saignée pour chasser le métal en fusion.

Or, une grande partie du gaz utilisée, typiquement entre 50 et 90%, n'a aucune action sur le processus de découpe, c'est-à-dire sur l'expulsion du métal en fusion, car elle part sur les cotés de la saignée de coupe.

Ces pertes de gaz sont en fait dues à l'énorme différence entre la section de passage de l'orifice de buse et la taille de la tâche focale. Ainsi, à titre indicatif, la section de passage d'une buse avec orifice de sortie de diamètre égal à 1.5 mm est 25 fois plus importante que la section de la tache focale créée par le faisceau laser traversant cette buse.

Or, si une proportion insuffisante de gaz est mise en oeuvre, on assiste alors à l'apparition de défauts de coupe, en particulier des bavures adhérentes et/ou des traces d'oxydation.

Tenter d'y remédier en réduisant le diamètre de l'orifice de la buse n'est pas idéal car on prend alors le risque de voir le faisceau laser venir frapper l'intérieur de la buse et la détériorer, ce qui par ailleurs détériore également la qualité de coupe et/ou les performances.

Il existe par ailleurs un certain nombre de documents proposant diverses solutions pour tenter de favoriser l'entrée du gaz dans la saignée, par exemple EP-A-1669159, JP-A-62006790 et JP-A-61037393.

Or, aucune de ces solutions n'est vraiment idéale car souvent d'architecture complexe à mettre en oeuvre, d'encombrement supérieur à celui d'une buse classique, et/ou présentant une efficacité limitée.

Certaines solutions proposent notamment d'utiliser une buse laser comprenant un élément mobile dont l'extrémité est plaquée par un ressort contre la surface de la pièce à découper afin de favoriser l'injection du gaz de coupe dans la saignée.

L'inconvénient majeur de ces solutions réside dans le fait que la force exercée par le ressort en direction de la tôle, cumulée à la pression du gaz de coupe, conduit l'élément mobile à exercer un effort important sur la tôle à couper. Il s'ensuit un risque de déformation, de rayure, voire d'entraînement de la tôle, laquelle est en général simplement posée sur la table de la machine industrielle de découpe.

De plus, l'élément mobile en contact avec la tôle est susceptible d'être détérioré par des bavures, des projections ou obstacles formant des reliefs à la surface de la tôle. Ceci réduit la durée de vie de la buse et nuit à la productivité du procédé.

Pour tenter de remédier à cela, le document JP-A-7251287 propose une buse laser comprenant un élément mobile et un ressort exerçant une force tendant à plaquer ledit élément sur la tôle. En outre, JP-A-7251287 propose d'utiliser la force exercée par le gaz de coupe délivré dans la buse et s'échappant sous la surface dudit élément située en regard de la tôle à couper pour provoquer un faible éloignement de l'élément mobile par rapport à la tôle.

Toutefois, cette solution continue de poser certains problèmes.

En particulier, un procédé industriel de découpe met en oeuvre des étapes au cours desquelles aucun gaz de coupe n'est délivré par la buse, ou bien seule une faible pression de gaz de coupe alimente la buse.

C'est notamment le cas lors du perçage de la tôle, qui est opéré avec de faibles pressions de gaz, typiquement moins de 4 bar, ou lors des déplacements rapides de la buse au-dessus de la tôle, à une distance allant typiquement de 0,5 mm à quelques mm, qui sont opérés sans gaz de coupe ni faisceau, en particulier lorsque plusieurs pièces en imbrication sont découpées sur une même tôle. Pour gagner en rapidité et en cadence de production, ces opérations sont en général réalisées en évitant de relever le dispositif qui supporte la buse par rapport à sa position en configuration de coupe.

Dans ces situations, la solution de JP-A-7251287 ne permet pas un éloignement suffisant de l'élément mobile par rapport à la tôle et on se retrouve confronté aux problèmes mentionnés ci-dessus. En outre, l'élément mobile fait en permanence saillie à l'extérieur du corps de buse. Il s'ensuit un risque accru endommagement. Ceci pose également problème dans les phases de perçage où une trop grande proximité de la buse avec la tôle est à proscrire du fait des projections importantes de métal fondu générées.

Le problème qui se pose est dès lors de pouvoir améliorer l'efficacité du gaz utilisé en coupage laser en augmentant la proportion de gaz ayant une action sur l'expulsion du métal en fusion et par conséquent de diminuer la quantité globale de gaz utilisée et la pression de gaz nécessaire tout en limitant la proportion de gaz perdu. En outre, le but de la présente invention est de pallier tout ou partie des inconvénients des dispositifs de l'art antérieur, notamment de limiter, voire d'éviter tout risque de rayures, de déformation, d'entraînement de la tôle découpée et d'endommagement de la buse laser, et ce au cours des différentes phases d'un procédé de découpe industriel, en particulier les phases ne mettant pas en oeuvre de gaz ou alors mettant en oeuvre de faibles pressions de gaz.

La solution de la présente invention est une buse laser comprenant :
- un corps de buse comprenant un logement axial traversant axialement ledit corps de buse et comprenant un premier orifice de sortie situé au niveau de la face avant du corps de buse,
- un élément mobile agencé dans le logement axial du corps de buse comprenant une partie avant formant jupe et un passage axial avec un deuxième orifice de sortie débouchant au niveau de la partie avant formant jupe, ledit élément mobile étant apte à se déplacer en translation dans le logement axial en direction du premier orifice de sortie sous l'effet d'une pression gazeuse s'exerçant sur l'élément mobile, et
- un élément élastique agencé dans le logement axial, entre le corps de buse et l'élément mobile, ledit élément élastique exerçant une force de rappel élastique sur l'élément mobile tendant à s'opposer au mouvement de translation dans le logement axial en direction du premier orifice de sortie,
caractérisée en ce que le profil interne dudit passage axial de l'élément mobile comprend une portion amont de forme tronconique convergente, une portion aval de forme tronconique divergente et une portion intermédiaire de forme cylindrique située entre la portion amont de forme tronconique convergente et la portion aval de forme tronconique divergente.

Selon le cas, la buse de l'invention peut comprendre l'une ou plusieurs des caractéristiques techniques suivantes :
- lorsque l'élément mobile se déplace en translation dans le logement axial en direction du premier orifice de sortie situé au niveau de la face avant du corps de buse, la partie avant formant jupe de l'élément mobile fait saillie à l'extérieur du logement axial au travers du premier orifice de sortie de la face avant du corps de buse.
- l'élément mobile est apte à se déplacer en translation dans le logement axial jusqu'à ce que la partie avant formant jupe de l'élément mobile vienne faire saillie à l'extérieur du logement axial au travers du premier orifice de sortie de la face avant du corps de buse.
- le fond du logement axial du corps de buse comprend un épaulement, et la paroi périphérique de l'élément mobile comprend une butée, l'élément élastique étant positionné entre l'épaulement et la butée.
- au moins un élément d'étanchéité est agencé entre le corps de buse et l'élément mobile.
- ledit au moins un élément d'étanchéité est agencé dans une gorge périphérique aménagée dans la paroi périphérique externe de l'élément mobile.
- l'élément mobile est apte à se déplacer entre plusieurs positions comprenant :
   - une position de repos dans laquelle la jupe de la partie avant est totalement ou quasi-totalement rentrée dans le logement axial du corps de buse, et
   - une position de travail dans laquelle la jupe de la partie avant fait totalement ou quasi-totalement saillie à l'extérieur du logement axial du corps de buse, au travers du premier orifice de sortie.
- le corps de buse est en un matériau conducteur électriquement, en particulier cuivre, laiton ou analogue.
- l'élément mobile est formé en tout ou en partie d'un matériau isolant électriquement.
- de manière alternative, l'élément mobile est en un matériau conducteur électriquement et résistant à la température/chaleur, en particulier cuivre, laiton ou analogue, ledit élément isolant comprenant au moins une interface isolante agencée entre la buse et la paroi de l'insert mobile. L'interface isolante est soit un manchon agencé dans le corps de buse, soit un revêtement isolant porté par le corps de buse ou l'élément mobile.

L'invention porte également sur une tête de focalisation laser comprenant au moins une optique de focalisation, caractérisée en ce qu'elle comporte en outre une buse laser selon l'une des revendications précédentes.

Par ailleurs, l'invention concerne aussi une installation laser comprenant un générateur laser, une tête de focalisation laser et un dispositif de convoyage de faisceau laser relié audit générateur laser et à ladite tête de focalisation laser, caractérisée en ce que la tête de focalisation laser est selon l'invention.

De préférence, le générateur laser est de type CO₂, YAG, à fibres ou à disques.

Selon encore un autre aspect, l'invention a également trait à procédé de coupage par faisceau laser d'une pièce à découper, dans lequel on met en oeuvre une buse selon l'invention, une tête de focalisation laser selon l'invention ou une installation selon l'invention.

De préférence, lorsqu'un flux gazeux traverse le passage axial de l'élément mobile de la buse, la portion aval tronconique divergente dudit élément mobile est apte à produire une fuite de gaz, de préférence contrôlée, entre la partie avant dudit élément mobile et la surface supérieure de la pièce à découper pour former une couche gazeuse sous la partie avant dudit élément mobile, s'opposant ainsi au mouvement de translation de l'élément mobile et maintenant la partie avant dudit élément mobile à une distance comprise entre 0,01 et 0,1 mm de la surface supérieure de la pièce à découper.

L'invention va maintenant être mieux comprise grâce à la description suivante faite en références aux Figures annexées parmi lesquelles :
- la Figure 1A schématise une tête de focalisation d'une installation de coupage laser classique,
- la Figure 1B schématise la taille du spot laser par rapport à la taille de l'orifice de buse,
- la Figure 2 est un schéma en coupe du corps d'une buse selon l'invention,
- la Figure 3 est un schéma en coupe d'une buse selon l'invention, et
- la Figures 4A et 4B montrent la buse de l'invention avec l'élément mobile dans deux positions différentes.

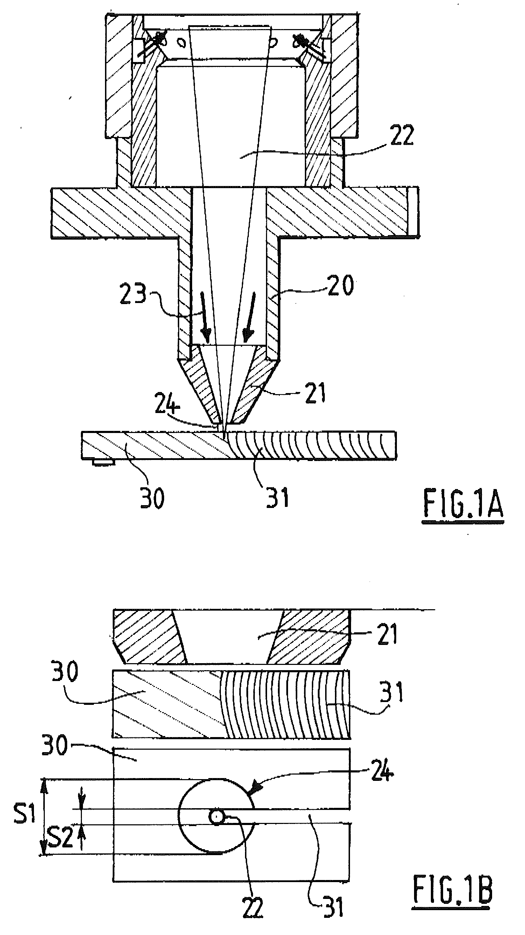

La Figure 1A représente la tête de focalisation 20 d'une installation de coupage laser classique, auquel est fixée une buse laser 21 classique qui est traversée par un faisceau laser focalisé et par du gaz d'assistance (flèche 23) servant à expulser le métal fondu par le faisceau hors de la saignée 31 de coupe formée par le faisceau 22 dans la pièce métallique à couper 30, par exemple une tôle en acier ou en acier inoxydable.

Le gaz d'assistance peut être un gaz actif, tel de l'oxygène, de l'air, du CO₂, de l'hydrogène, ou un gaz inerte, tel l'argon, l'azote, l'hélium, ou un mélange de plusieurs ces gaz actifs et/ou inertes. La composition du gaz est choisie notamment en fonction de la nature de la pièce à couper.

Le faisceau qui vient impacter la pièce va y fondre le métal qui sera expulsé en-dessous de la pièce par la pression du gaz d'assistance.

La Figure 1B permet de bien visualiser la section S1 de passage de l'orifice 24 de la buse 21 par rapport à la taille S2 de la tâche focale du faisceau 22. Comme on le voit, la section S1 est très supérieure à la taille S2 de la tâche focale du faisceau 22, ce qui engendre, avec les buses classiques, une consommation élevée de gaz d'assistance dont seulement une faible proportion va servir à expulser le métal fondu hors de la saignée de coupe 31.

Pour réduire considérablement la consommation de gaz ainsi que la pression nécessaire à la découpe, la présente invention propose une buse laser améliorée apte à et conçue pour couper avec un faisceau laser en mettant en oeuvre un débit de gaz et/ou une pression de gaz réduits grâce à une architecture de buse particulière permettant de forcer une proportion plus importante de gaz à rentrer dans la saignée 31 et à y expulser efficacement le métal fondu, et ce, quelle que soit la puissance laser ainsi et la longueur d'onde du faisceau.

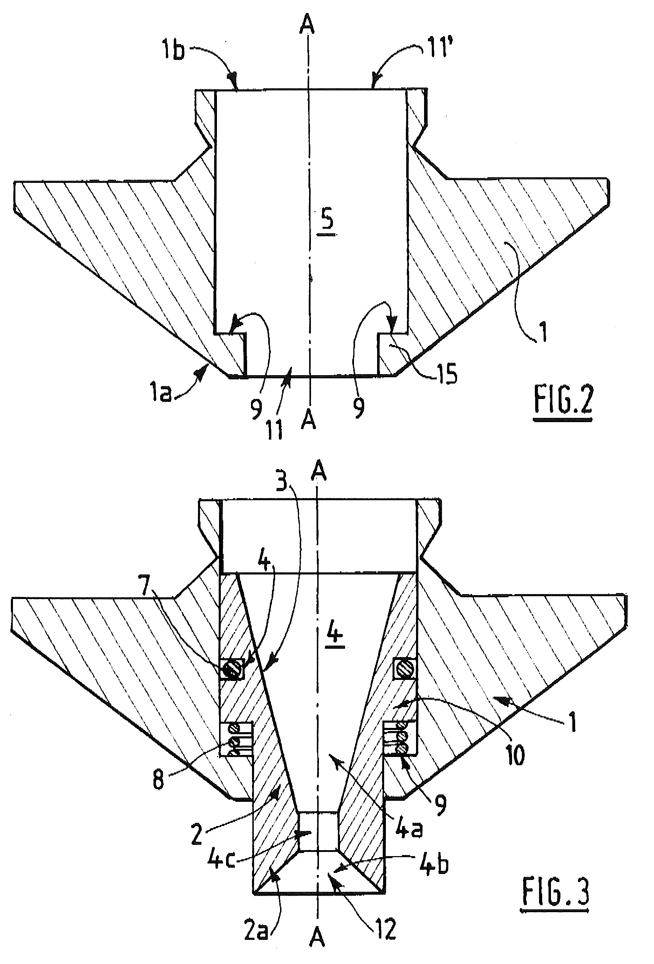

Selon l'invention, la buse laser comprend au moins deux composants essentiels, à savoir un corps 1 de buse coopérant avec un élément mobile 2 agencé et façon mobile à l'intérieur du corps 1 de la buse, dont un mode de réalisation est illustré en Figures 2 et 3. Plus précisément, comme visible en Figure 2, le corps 1 de buse qui est formé d'un matériau conducteur, par exemple du cuivre ou du laiton, est destiné à venir se fixer sur la tête de focalisation laser 20 de l'installation laser.

Avantageusement, le corps 1 de buse est une pièce de révolution et est traversé de part en part par un logement axial 5 d'axe AA qui s'étend depuis la face arrière 1b du corps 1 jusqu'à la face avant 1a dudit corps 1.

Le logement axial 5 débouche au niveau des deux faces avant 1a et arrière 1b du corps 1 de buse. La face arrière 1b porte donc un premier orifice d'entrée 11', alors que la face avant 1a porte un premier orifice de sortie 11 du corps de buse 1, les premiers orifices d'entrée 11' et de sortie 11 étant coaxiaux d'axe AA.

Ce logement axial 5 est en fait un évidement, par exemple de forme cylindrique comprenant un épaulement 9 interne se projetant radialement vers le centre du logement 5, ledit épaulement interne 9 étant formé par une restriction 15 de la section du logement axial 5 au niveau du premier orifice de sortie 11 située en face avant 1a du corps 1 de buse.

La buse de l'invention comprend par ailleurs un élément mobile 2 venant s'insérer dans le logement 5 du corps 1 de buse, comme visible en Figure 3. Cet élément mobile 2 est apte à et conçu pour se déplacer en translation selon l'axe AA à l'intérieur du logement 5 du corps 1 de buse.

Plus précisément, cet élément mobile 2 comprend une partie avant 2a formant une jupe 6, typiquement de forme cylindrique, c'est-à-dire tubulaire, agencée dans le logement axial 5 du corps de buse 1 et comprenant un passage axial 4 avec un deuxième orifice de sortie 12 débouchant au niveau de la partie avant 2 formant ladite jupe 6.

Pendant l'utilisation de la buse, le faisceau laser 22 et le gaz d'assistance 23 traversent le passage axial 4 de l'élément mobile 2 et ressortent par le deuxième orifice de sortie 12 débouchant au niveau de la partie avant 2 formant ladite jupe 6

L'élément mobile 2 est préférentiellement formé d'un matériau isolant, par exemple polyétheréthercétone (Peek), Vespel ®, céramique ou pyrex.

Le profil interne du passage axial 4 de l'élément mobile 2 comprend, le long de l'axe AA, une portion amont 4a de forme tronconique convergente, i. e. dont la section se réduit progressivement, suivi d'une portion aval 4b de forme tronconique divergente, i. e. dont la section augmente progressivement jusqu'à former l'orifice de sortie 12 de l'élément mobile 2.

De façon alternative, le profil interne du passage axial 4 de l'élément mobile 2 comprend en outre une portion intermédiaire 4c de forme cylindrique située entre la portion amont tronconique 4a et la portion aval tronconique 4b du profil interne du passage axial 4.

L'élément mobile 2 est déplaçable axialement par rapport au corps 1 de la buse selon l'axe AA. En fait, l'élément mobile 2 se déplace sous l'effet de la pression du gaz d'assistance 23 qui vient s'exercer sur ledit élément mobile 2, ce qui tend à le pousser en direction de la pièce à couper 30.

Le déplacement en translation selon l'axe AA de l'élément mobile 2 va provoquer le rapprochement de la jupe 6 de la surface supérieure de la pièce 30 à découper. Plus précisément, la forme tronconique divergente de la portion aval 4b du profil interne de l'élément mobile 2 est apte à produire une fuite de gaz contrôlée entre la partie avant 2a de l'élément mobile 2 et la surface supérieure de la pièce 30 à découper. Ceci va favoriser la formation d'une fine couche gazeuse sous la partie avant 2a, s'opposant ainsi au mouvement de translation de l'élément mobile 2 vers la pièce à découper 30 et maintenant la partie avant 2a de l'élément mobile 2 à une distance 32 comprise entre 0,01 et 0,1 mm de la surface supérieure de la pièce à découper 30.

Ainsi, le gaz va être canalisé par la jupe 6 et se trouver concentré au niveau de la tâche laser et donc de la saignée, ce qui va grandement améliorer son efficacité et l'expulsion du métal se fera mieux.

Par ailleurs, la fine couche gazeuse formée grâce à la portion aval 4b du profil interne de l'élément mobile 2 permet de maintenir la partie avant 2a de l'élément mobile 2 à une distance 32 et donc de limiter le contact de l'insert avec la tôle, évitant ainsi tout risque de rayure de la tôle découpée. Bien entendu, la portion aval 4b du profil interne de l'élément mobile 2 est apte à produire une fuite de gaz contrôlée suffisamment faible pour conserver l'aptitude de la jupe 6 à concentrer le gaz au niveau de la saignée.

Selon l'invention, un élément élastique 8, tel un ressort, est agencé dans le logement axial 5, entre le corps de buse 1 et l'élément mobile 2 de manière à exercer une force de rappel élastique sur l'élément mobile 2 dans un sens tendant à l'éloigner de la pièce à couper.

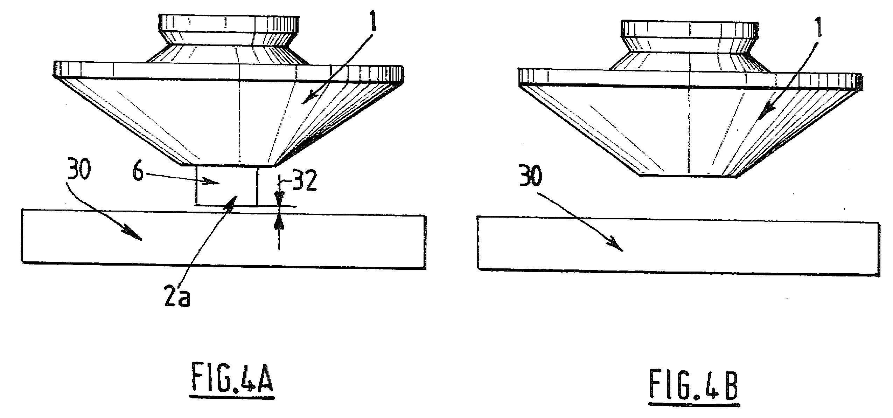

Ainsi, en fin de coupe, lorsque le gaz est coupé et que la pression gazeuse cesse de s'exercer sur l'élément mobile 2, celui-ci peut être rappelé dans sa position de repos et donc la jupe 6 rentrer totalement ou quasi-totalement à l'intérieur du logement 5, comme illustré en figure 4B.

Il est ainsi possible d'opérer des déplacements rapides du corps de la buse au-dessus de la tôle, typiquement à quelques mm de la tôle, en évitant que l'élément mobile ne fasse saillie à l'extérieur du logement 5, ou en limitant grandement la portion de jupe faisant saillie à l'extérieur du logement 5, et donc sans risquer d'endommager l'élément mobile 2, en particulier la partie avant 2a.

La buse de l'invention permet aussi de réaliser des opérations de perçage à faible pression de gaz, sans que l'élément mobile 2 ne fasse saillie à l'extérieur du logement 5, ou en limitant grandement la portion de jupe 2a faisant saillie à l'extérieur du logement 5. On dimensionne alors avantageusement la force de rappel de l'élément élastique 8 pour qu'une pression de gaz allant de préférence jusqu'à 4 bar ne soit pas suffisante pour que l'élément mobile 2 se déplace en translation vers la tôle. On évite ainsi d'endommager l'intérieur de l'élément mobile 2 et la partie avant 2a.

Au final, la présente invention permet que l'élément mobile 2 puisse être éloigné de la tôle, sans avoir à relever, c'est-à-dire éloigner de la tôle, la tête de focalisation qui supporte la buse de l'invention.

Il est à noter que la paroi périphérique externe de l'élément mobile 2 comprend une butée 10, de préférence une butée annulaire s'étendant sur tout ou partie de la périphérie dudit élément mobile 2, l'élément élastique 8 étant positionné entre l'épaulement 9 et la butée 10.

En fait, l'élément mobile 2 de la buse selon l'invention est donc apte à se déplacer entre plusieurs positions comprenant au moins:
- une position de repos dans laquelle la jupe 6 de la partie avant 2a est totalement ou quasi-totalement rentrée dans le logement axial 5 du corps de buse 1, comme illustré en Figure 4B, et
- une position de travail dans laquelle la jupe 6 de la partie avant 2a fait totalement ou quasi-totalement saillie à l'extérieur du logement axial 5 du corps de buse 1, au travers du premier orifice de sortie 11, et vient à une distance 32 de la surface supérieure de la pièce 30 à couper, comme illustré en Figure 4A.

Bien entendu, l'élément mobile 2 peut occuper des positions intermédiaires dans lesquelles la jupe 6 ne fait que partiellement saillie à l'extérieur du logement axial 5 du corps de buse 1. Ces positions intermédiaires peuvent être notamment fonction de la pression exercée par le gaz sur l'élément mobile 2.

Par ailleurs, au moins un élément d'étanchéité 7 est agencé entre le corps de buse 1 et l'élément mobile 2, en particulier un ou plusieurs joints toriques 7, ce qui permet d'assurer une étanchéité entre le corps de buse 1 et l'insert mobile 2.

Comme on le voit sur la Figure 3, la buse de l'invention est d'encombrement standard, c'est-à-dire que son encombrement n'est pas augmenté par rapport à une buse de coupe classique, ce qui est avantageux et compatible pour les découpes par imbrication, c'est-à-dire de pièces au sein d'une même tôle avec très peu d'écart entre les différentes pièces.

De plus, la buse de l'invention présente l'autre avantage d'être compatible avec les systèmes de capteur capacitif. En effet, la partie en cuivre ou autre matériau conducteur s'adapte a la hauteur spécifié par le capteur capacitif, comme une buse standard. C'est l'insert mobile 2 qui, sous la pression du gaz, vient à proximité de la tôle 30 à couper et permet ainsi de limiter les fuites de gaz.

La buse de l'invention comprend un élément mobile 2 dont le diamètre d'orifice de sortie 12 est compris de préférence entre 0.5 et 5mm.

### Exemples

Afin de montrer l'efficacité de la buse selon l'invention par rapport à une buse standard, et donc l'intérêt de forcer le gaz dans la saignée de coupe grâce à la mise en oeuvre d'une jupe montée sur un élément mobile, on réalisé des essais comparatifs en utilisant une installation de coupage avec générateur laser de type CO₂ pour généré un faisceau laser qui est amené à une tête de focalisation laser comprenant des optiques de focalisation, à savoir des lentilles.

La tête de focalisation laser est équipée, selon le cas, d'une buse standard avec orifice de sortie de 1,8 mm de diamètre ou d'une buse selon la Figure 3 avec jupe mobile cylindrique de 1,8 mm de diamètre.

Le gaz d'assistance utilisé est de l'azote.

La pièce coupée est une tôle d'acier inoxydable 304 L de 5 mm d'épaisseur.

Le faisceau laser a une puissance de 4 kW et la vitesse de coupe est de 2,6 m/min

Les résultats obtenus ont montré que :
- avec la buse standard, une pression du gaz de 14 bar est insuffisante pour obtenir une coupe de qualité. En effet, à 14 bar, les bords de coupe comportent de nombreuses bavures adhérentes. Ceci démontre que l'évacuation du métal en fusion se fait mal du fait d'une action insuffisante du gaz sur le métal en fusion devant être expulsé. Afin d'éliminer ces bavures, une pression de 16 bar a été nécessaire.
- avec la buse de l'invention, des essais faits à des pressions s'échelonnant entre 1 et 5 bar ont conduit à des coupes de bonne qualité, c'est-à-dire à des bords de coupe dépourvus de bavures adhérentes. La jupe de la buse permet de canaliser le gaz dans la saignée et d'expulser efficacement le métal fondu. La surface supérieure de la tôle coupée est exempte de rayures.

Ces essais démontrent clairement l'efficacité d'une buse selon l'invention qui permet de réduire considérablement les pressions de gaz à mettre en oeuvre par rapport à une buse standard, toutes conditions étant égales par ailleurs, et donc de réduire également les consommations gazeuses.

## Revendications

1. Buse laser (1, 2) comprenant :
- un corps (1) de buse comprenant un logement axial (5) traversant axialement ledit corps de buse (1) et comprenant un premier orifice de sortie (11) situé au niveau de la face avant (1a) du corps de buse (1),
- un élément mobile (2) agencé dans le logement axial (5) du corps de buse (1) comprenant une partie avant (2a) formant jupe et un passage axial (4) avec un deuxième orifice de sortie (12) débouchant au niveau de la partie avant (2a) formant jupe, ledit élément mobile (2) étant apte à se déplacer en translation dans le logement axial (5) en direction du premier orifice de sortie (11) sous l'effet d'une pression gazeuse s'exerçant sur l'élément mobile (2), et
- un élément élastique (8) agencé entre le corps de buse (1) et l'élément mobile (2), **caractérisé en ce que** ledit élément élastique (8) est agencé dans le logement axial (5) et exerce une force de rappel élastique sur l'élément mobile (2) tendant à s'opposer au mouvement de translation dans le logement axial (5) en direction du premier orifice de sortie (11),
le profil interne dudit passage axial (4) de l'élément mobile (2) comprenant une portion amont (4a) de forme tronconique convergente, une portion aval (4b) de forme tronconique divergente et une portion intermédiaire (4c) de forme cylindrique située entre la portion amont (4a) de forme tronconique convergente et la portion aval (4b) de forme tronconique divergente.

2. Buse selon la revendication précédente, **caractérisée en ce que** lorsque l'élément mobile (2) se déplace en translation dans le logement axial (5) en direction du premier orifice de sortie (11) situé au niveau de la face avant (1a) du corps de buse (1), la partie avant (2a) formant jupe de l'élément mobile (2) fait saillie à l'extérieur du logement axial (5) au travers du premier orifice de sortie (11) de la face avant (1a) du corps de buse (1).

3. Buse selon l'une des revendications précédentes, **caractérisée en ce que** l'élément mobile (2) est apte à se déplacer en translation dans le logement axial (5) jusqu'à ce que la partie avant (2a) formant jupe de l'élément mobile (2) vienne faire saillie à l'extérieur du logement axial (5) au travers du premier orifice de sortie (11) de la face avant (1a) du corps de buse (1).

4. Buse selon l'une des revendications précédentes, **caractérisée en ce que** le fond (15) du logement axial (5) du corps (1) de buse comprend un épaulement (9), et la paroi périphérique de l'élément mobile (2) comprend une butée (10), l'élément élastique (8) étant positionné entre l'épaulement (9) et la butée (10).

5. Buse selon l'une des revendications précédentes, **caractérisée en ce qu'**au moins un élément d'étanchéité (7) est agencé entre le corps de buse (1) et l'élément mobile (2).

6. Buse selon l'une des revendications précédentes, **caractérisée en ce que** ledit au moins un élément d'étanchéité (7) est agencé dans une gorge périphérique (14) aménagée dans la paroi périphérique externe de l'élément mobile (2).

7. Buse selon l'une des revendications précédentes, **caractérisée en ce que** l'élément mobile (2) est apte à se déplacer entre plusieurs positions comprenant :
- une position de repos dans laquelle la jupe de la partie avant (2a) est totalement ou quasi-totalement rentrée dans le logement axial (5) du corps de buse (1), et
- une position de travail dans laquelle la jupe de la partie avant (2a) fait totalement ou quasi-totalement saillie à l'extérieur du logement axial (5) du corps de buse (1), au travers du premier orifice de sortie (11).

8. Tête de focalisation laser comprenant au moins une optique de focalisation, **caractérisée en ce qu'**elle comporte en outre une buse laser selon l'une des revendications précédentes.

9. Installation laser comprenant un générateur laser, une tête de focalisation laser et un dispositif de convoyage de faisceau laser relié audit générateur laser et à ladite tête de focalisation laser, **caractérisée en ce que** la tête de focalisation laser est selon la revendication 8.

10. Installation selon la revendication 9, **caractérisée en ce que** le générateur laser est de type CO₂, YAG, à fibres ou à disques.

11. Procédé de coupage par faisceau laser d'une pièce (30) à découper, dans lequel on met en oeuvre une buse selon l'une des revendications 1 à 7, une tête de focalisation laser selon la revendication 8 ou une installation selon l'une des revendications 9 ou 10.

12. Procédé de coupage selon la revendication 11, **caractérisé en ce que** lorsqu'un flux gazeux traverse le passage axial (4) de l'élément mobile (2) de la buse, la portion aval tronconique divergente (4b) dudit élément mobile (2) est apte à produire une fuite de gaz entre la partie avant (2a) dudit élément mobile (2) et la surface supérieure de la pièce (30) à découper pour former une couche gazeuse sous la partie avant (2a) de l'élément mobile (2), s'opposant ainsi au mouvement de translation de l'élément mobile (2) et maintenant la partie avant (2a) dudit élément mobile (2) à une distance (32) comprise entre 0,01 et 0,1 mm de la surface supérieure de la pièce (30) à découper.

## Patentansprüche

1. Laserdüse (1, 2), umfassend:
- einen Düsenkörper (1), umfassend eine axiale Aufnahme (5), die den Düsenkörper (1) axial durchquert und eine erste Ausgangsöffnung (11) umfasst, die sich auf der Ebene der vorderen Seite (1a) des Düsenkörpers (1) befindet,
- ein bewegliches Element (2), das in der axialen Aufnahme (5) des Düsenkörpers (1) angeordnet ist, und umfassend einen vorderen Teil (2a), der einen Mantel bildet und einen axialen Durchgang (4) mit einer zweiten Ausgangsöffnung (12), die auf der Ebene des vorderen Teils (2a), der einen Mantel bildet, mündet, wobei das bewegliche Element (2) dazu in der Lage ist, sich in Translation in der axialen Aufnahme (5) in Richtung der ersten Ausgangsöffnung (11) unter der Einwirkung eines gasförmigen Drucks, der auf das bewegliche Element (2) ausgeübt wird, zu verschieben, und
- ein elastisches Element (8), das zwischen dem Düsenkörper (1) und dem beweglichen Element (2) angeordnet ist, **dadurch gekennzeichnet, dass** das elastische Element (8) in der axialen Aufnahme (5) angeordnet ist und eine elastische Rückstellkraft auf das bewegliche Element (2) ausübt, die dazu neigt, sich der Translationsbewegung in der axialen Aufnahme (5) in Richtung der ersten Ausgangsöffnung (11) entgegenzusetzen,
wobei das innere Profil des axialen Durchgangs (4) des beweglichen Elements (2) einen vorgelagerten Abschnitt (4a) mit konvergierender Kegelstumpfform umfasst, einen nachgelagerten Abschnitt (4b) mit divergierender Kegelstumpfform und einen Zwischenabschnitt (4c) mit zylindrischer Form, der sich zwischen dem vorgelagerten Abschnitt (4a) mit konvergierender Kegelstumpfform und dem nachgelagerten Abschnitt (4b) mit divergierender Kegelstumpfform befindet.

2. Düse nach dem vorhergehenden Anspruch, **dadurch gekennzeichnet, dass**, wenn sich das bewegliche Element (2) in Translation in der axialen Aufnahme (5) in Richtung der ersten Ausgangsöffnung (11) verschiebt, die sich auf der Ebene der vorderen Seite (1a) des Düsenkörpers (1) befindet, der vordere Teil (2a), der einen Mantel bildet, des beweglichen Elements (2) über die erste Ausgangsöffnung (11) der vorderen Seite (1a) des Düsenkörpers (1) auf die Außenseite der axialen Aufnahme (5) vorspringt.

3. Düse nach einem der vorhergehenden Ansprüche, **dadurch gekennzeichnet, dass** das bewegliche Element (2) ausgelegt ist, um sich in Translation in der axialen Aufnahme (5) zu verschieben, bis der vordere Teil (2a), der einen Mantel bildet, des beweglichen Elements (2) über die erste Ausgangsöffnung (11) der vorderen Seite (1a) des Düsenkörpers (1) auf die Außenseite der axialen Aufnahme (5) vorspringt.

4. Düse nach einem der vorhergehenden Ansprüche, **dadurch gekennzeichnet, dass** der Boden (15) der axialen Aufnahme (5) des Düsenkörpers (1) einen Absatz (9) umfasst und die Umfangswand des bewegbaren Elements (2) einen Anschlag (10) umfasst, wobei das elastische Element (8) zwischen dem Absatz (9) und dem Anschlag (10) positioniert ist.

5. Düse nach einem der vorhergehenden Ansprüche, **dadurch gekennzeichnet, dass** mindestens ein Dichtelement (7) zwischen dem Düsenkörper (1) und dem beweglichen Element (2) angeordnet ist.

6. Düse nach einem der vorhergehenden Ansprüche, **dadurch gekennzeichnet, dass** das mindestens eine Dichtelement (7) in einer Umfangsnut (14) angeordnet ist, die in der äußeren Umfangswand des beweglichen Elements (2) angebracht ist.

7. Düse nach einem der vorhergehenden Ansprüche, **dadurch gekennzeichnet, dass** das bewegliche Element (2) ausgelegt ist, um sich zwischen mehreren Positionen zu bewegen, umfassend:
- eine Ruheposition, in der der Mantel des vorderen Teils (2a) vollständig oder fast vollständig in die axiale Aufnahme (5) des Düsenkörpers (1) zurückgezogen ist, und
- eine Betriebsposition, in der der Mantel des vorderen Teils (2a) vollständig oder fast vollständig an die Außenseite der axialen Aufnahme (5) des Düsenkörpers (1) durch die erste Ausgangsöffnung (11) vorspringt.

8. Laserfokussierungskopf, umfassend mindestens eine Fokussierungsoptik, **dadurch gekennzeichnet, dass** er außerdem eine Laserdüse nach einem der vorhergehenden Ansprüche umfasst.

9. Laseranlage, umfassend einen Lasergenerator, einen Laserfokussierungskopf und eine Laserstrahl-Fördervorrichtung, die mit dem Lasergenerator und dem Laserfokussierungkopf verbunden ist, **dadurch gekennzeichnet, dass** der Laserfokussierungskopf nach Anspruch 8 ist.

10. Anlage nach Anspruch 9, **dadurch gekennzeichnet, dass** der Lasergenerator vom Typ CO₂, YAG, mit Fasern oder Scheiben ist.

11. Verfahren zum Schneiden durch einen Laserstrahl eines Stücks (30), das ausgeschnitten werden soll, wobei eine Düse nach einem der Ansprüche 1 bis 7, ein Laserfokussierungskopf nach Anspruch 8 oder eine Anlage nach einem der Ansprüche 9 bis 10 ausgeführt wird.

12. Verfahren nach Anspruch 11, **dadurch gekennzeichnet, dass**, wenn ein gasförmiger Fluss den axialen Durchgang (4) des beweglichen Elements (2) der Düse durchquert, der divergierende kegelförmige nachgelagerte Abschnitt (4b) des beweglichen Elements (2) ausgelegt ist, um ein Gasleck zwischen dem vorderen Teil (2a) des beweglichen Elements (2) und der oberen Fläche des Stücks (30), das ausgeschnitten werden soll, zu erzeugen, um eine gasförmige Schicht unter dem vorderen Teil (2a) des beweglichen Elements (2) zu bilden, die sich so der Translationsbewegung des beweglichen Elements (2) entgegensetzt und den vorderen Teil (2a) des beweglichen Elements (2) in einem Abstand (32) zwischen 0,01 und 0,1 mm von der oberen Fläche des Stücks (30), das ausgeschnitten werden soll, hält.

## Claims

1. Laser nozzle (1, 2), comprising:
- a nozzle body (1) comprising an axial housing (5) passing through said nozzle body (1) in the axial direction and comprising a first outlet orifice (11) located on the front face (1a) of the nozzle body (1);
- a mobile element (2) arranged in the axial housing (5) of the nozzle body (1) comprising a front part (2a) forming a skirt and an axial passage (4) with a second outlet orifice (12) opening up at the front part (2a) forming the skirt, said mobile element (2) being capable of moving in translation in the axial housing (5) along the direction of the first outlet orifice (11) under the effect of a gas pressure applied on the mobile element (2), and
- an elastic element (8) placed between the nozzle body (1) and the mobile element (2), **characterised in that** said elastic element (8) is located in the axial housing (5) and applies an elastic return force on the mobile element (2) that tends to oppose the translation movement in the axial housing (5) towards the first outlet orifice (11);
the internal profile of said axial passage (4) of the mobile element (2) comprising an upstream portion (4a) in the shape of a converging taper, a downstream portion (4b) in the form of a diverging taper, and an intermediate cylindrically shaped portion (4c) located between the converging upstream tapered portion (4a) and the diverging downstream tapered portion (4b).

2. Nozzle according to the previous claim, **characterised in that** when the mobile element (2) moves in translation in the axial housing (5) towards the first outlet orifice (11) located at the front face (1a) of the nozzle body (1), the front part (2a) forming the skirt of the mobile element (2) projects outwards from the axial housing (5) through the first outlet orifice (11) on the front face (1a) of the nozzle body (1).

3. Nozzle according to one of the previous claims, **characterised in that** the mobile element (2) is capable of moving in translation in the axial housing (5) until the front part (2a) forming the skirt of the mobile element (2) projects outside the axial housing (5) through the first outlet orifice (11) on the front face (1a) of the nozzle body (1).

4. Nozzle according to one of the previous claims, **characterised in that** the bottom (15) of the axial housing (5) of the nozzle body (1) comprises a shoulder (9), and the peripheral wall of the mobile element (2) comprises a stop (10), the elastic element (8) being positioned between the shoulder (9) and the stop (10).

5. Nozzle according to any one of the previous claims, **characterised in that** at least one sealing element (7) is formed between the nozzle body (1) and the mobile element (2).

6. Nozzle according to any one of the previous claims, **characterised in that** said at least one sealing element (7) is located in a peripheral groove (14) formed in the outer peripheral wall of the mobile element (2).

7. Nozzle according to any one of the previous claims, **characterised in that** the mobile element (2) can move between several positions including:
- a rest position in which the skirt of the front part (2a) is almost completely retracted into the axial housing (5) of the nozzle body (1), and
- a working position in which the skirt of the front part (2a) is almost completely projecting outside the axial housing (5) of the nozzle body (1), through the first outlet orifice (11).

8. Laser focusing head comprising at least one focusing optic, **characterised in that** it also comprises a laser nozzle according to one of the previous claims.

9. Laser installation comprising a laser generator, a laser focusing head and a laser beam conveying device connected to said laser generator and to said laser focusing head, **characterised in that** the laser focusing head complies with claim 8.

10. Installation according to claim 9, **characterised in that** the laser generator is of the CO2, YAG, fibre or disk type.

11. Method of cutting a part (30) using a laser beam, in which a nozzle according to one of claims 1 to 7 is used, a laser focusing head according to claim 8 or an installation according to claim 9 or 10.

12. Cutting method according to claim 11, **characterised in that** when a gas flux passes through the axial passage (4) of the mobile element (2) of the nozzle, the downstream diverging tapered portion (4b) of said mobile element (2) can produce a gas leak between the front part (2a) of said mobile element (2) and the upper surface of the part (30) to be cut to form a gas layer under the front part (2a) of the mobile element (2), thus opposing translation movement of the mobile element (2) and holding the front part (2a) of said mobile element (2) at a distance (32) equal to between 0.01 and 0.1 mm from the top surface of the part (30) to be cut.
